# EUROPEAN PATENT APPLICATION

(11) **EP 1 684 253 A1**
(43) Date of publication of application: **26.07.2006**
(21) Application number: 06250363.6
(22) Date of filing: 24.01.2006
(51) Int. Cl.: G09B 29/00, G01C 21/00

(54) **Gallery tour guide system and method for real-time provision of information using stored data.**

(30) Priority: 25.01.2005 KR 2005006813
(71) Applicant: Samsung Electronics Co., Ltd., Suwon-si, Gyeonggi-Do (KR)
(72) Inventor: An, Soo-jin, Seoul (KR); Ok, Hyeong-Soo, Dongdaemun-gu Seoul (KR); Hahn, Dong-hoon, Gangnam-gu Seoul (KR); Jeong, Ji-yeon, Dongjak-gu Seoul (KR)
(74) Representative: Robinson, Ian Michael

(57) **Abstract**

An exhibition guide system and a method for providing information in real time uses stored data. The exhibition guide system provides information in real time using stored data. The exhibition guide system includes an exhibition data server (500) for storing information on exhibitions, a portable information providing unit for storing the information on exhibitions and outputting the stored information, and an information storage unit (400) for storing the information stored in the exhibition data server (500) in the portable information providing unit (100).

## Description

Apparatuses and methods consistent with the present invention relate to a guide system and method for real-time provision of information using stored data.

In the related art, when viewing exhibits, works or articles on exhibition in art galleries, museums, exhibitions, and fairs, users carry and read brochures or catalogs containing information on the works. In some cases, users are directly guided by a guide or a curator at the exhibition, or audio guidance is broadcasted in each room of the exhibition. However, this related art method is inconvenient because the users have to visit the art gallery or exhibition at a specific time to acquire the necessary information. Further, users who are distant from the guide or the curator may have difficulty hearing their explanation.

Alternatively, it is possible for a user to access the homepage of an art gallery via the Internet, and view information on the works. However, this option is only possible under when a network and an Internet-accessible personal computer (PC) are available for use. Further, there is the related art problem that real-time reception of the information cannot be realized by matching the work on exhibition with the relevant information in one-to-one correspondence while the user is directly viewing the work.

In addition, when a device is used to convey the information related to the work, the user usually listens to content pre-loaded on a tape after inputting an identifier (ID) of the work that he/she desires to know about, using a key input method based on a keypad when a related art audio player and a personal digital assistant (PDA) device are used. Recently, an automatic related art method has been widely used. When a user approaches a work on exhibition while carrying an up-to-date device such as a PDA, an ID of the work is automatically sensed, and audio/text information about the work is provided. However, both of these related art cases are limited to audio/text information, and there is a drawback in that the devices cannot provide images or moving images. Therefore, the demand for digital multimedia content is overlooked in the related art.

As ubiquitous computing and wireless networks are attracting keen attention, a related art tour guide system based on a personal terminal has been suggested for art galleries, exhibitions, fairs and the like, to replace brochures or explanations and increase the exchange of information.

In Japanese Unexamined Patent Publication No. 2002-157371, a related art gallery system is disclosed, in which the server of a gallery information center receives identification information on a specific work on exhibition that is recognized by a user's wireless portable terminal, and transmits the information related to the exhibit to the user's wireless portable terminal. In this related art gallery guide system, the wireless portable terminal sends the identification information of the recognized work, and receives detailed information about the work. Further, when the user wants to store information on a specific work on exhibition, the server of the gallery information center receives and stores that information. However, in this related art method, information related to the work on exhibition is received manually and displayed to the user. Also, other services are not provided through the wireless portable terminal.

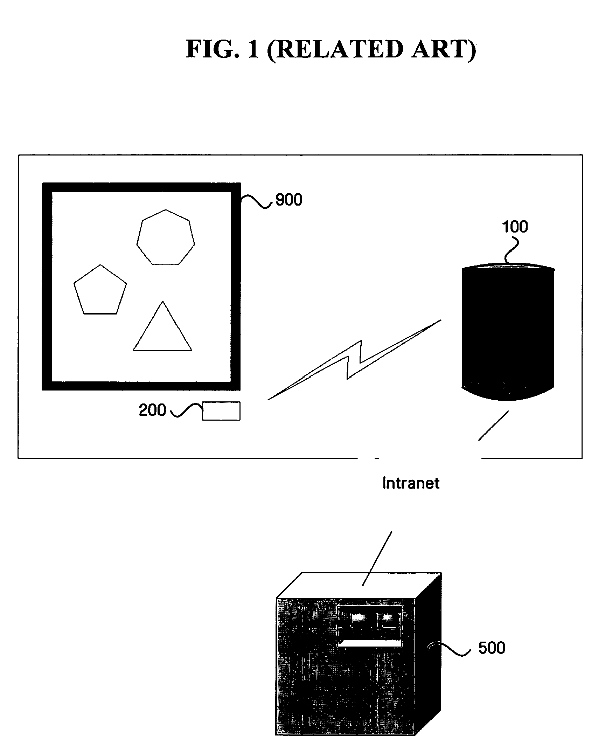

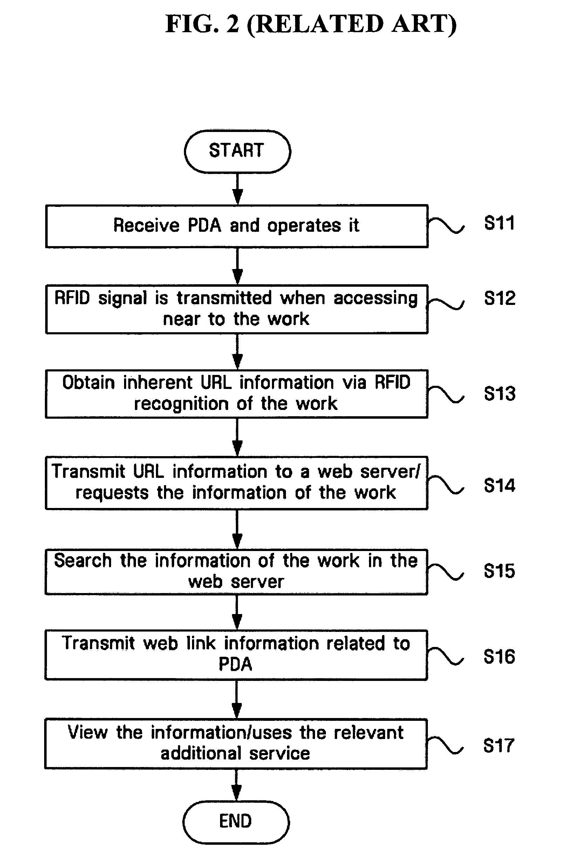

In connection with the recent related art ubiquitous computing trend, a related art "Cool Town" gallery concept has been disclosed by HP Corporation, which will be explained in detail with reference to Figures 1 and 2.

Figure 1 is a view showing a gallery tour guide system for viewing works on exhibition in a PDA-based art gallery within "Cool Town" according to the related art. The "Cool Town" gallery is composed of works on exhibition 900 including books, paintings, and sculptures with small RFID tags 200 attached to them, as well as a PDA 100 and a web server 500. Each exhibition work 900 includes a radio frequency identification (RFID) tag 200 that sends a unique entry of the work and a unique Uniform Resource Locator (URL), which wirelessly provides the information on the work, to the PDA 100; an infrared ray signal can be used here. A viewer requests the web server 500 to supply the relevant information using the web browser of the PDA, and obtains information about the work on exhibition that he/she is now viewing, by establishing a link with a URL received from the web server 500. If the received URL is stored as a bookmark, the stored URL can be used when the user wants to buy a relevant book or postcard at an on-line bookstore within the cool town gallery. That is, when the viewer moves to the cool town bookstore, it is possible to easily find, via the PDA, the display stand on which books, calendars, and postcards are displayed for sale.

Figure 2 is a flow chart showing the process of using a Cool Town gallery according to the related art. When a user receives a PDA, the user turns the PDA on S11 and begins to view works on exhibition. If the user approaches a work on exhibition while carrying the PDA, the RFID signal of the work on exhibition is transmitted S12, and the PDA acquires the unique URL of the work S13. The PDA transmits the URL of the work to the web server 500 with a request for information about the concerned work S14. The web server that receives the request from the PDA searches for information on the concerned work S15. The web server then transmits the found web link information to the PDA S16. Then, the user connects to the relevant site using the received web link via the PDA, views the information and uses any additional relevant service S17.

However, since the related art "Cool Town" gallery provides information related to a work on exhibition by recognizing the work via an RFID, a connection to a web server is always required. Even in the related art Japanese patent application described above, information about the work on exhibition is received via a server in the exhibition or gallery information center. Accordingly, the art gallery requires a web intranet environment to allow users to obtain information about the works on exhibition. In the related art, a user must connect to the Internet or use a link by inputting a required URL, every time they want to acquire information. That is, when searching for information, the user has to move to a web page that stores the information through a separate connection to a web server.

According to the present invention there is provided an apparatus and method as set forth in the appended claims. Preferred features of the invention will be apparent from the dependent claims, and the description which follows.

The present invention provides a gallery tour guiding system and method for quickly acquiring information on works on exhibition using stored data which is synchronized with information on actual works.

The present invention also provides a gallery tour guiding system and method for providing additional services related to information on works on exhibition and a tour.

The present invention also provides a guided gallery tour system and method for real-time provision of information using stored data.

According to an aspect of the present invention, there is provided an exhibition guide system for providing information in real time using stored data includes an exhibition data server for storing information on exhibitions, a portable information providing unit for storing the information on exhibitions and outputting the stored information, and an information storage for storing the information stored in the exhibition data server in the portable information providing unit.

According to another aspect of the present invention, there is provided an exhibition guide method for providing information in real time using stored data includes generating information on exhibitions, storing the information on exhibitions in a portable information providing unit, and outputting the information on exhibitions from the portable information providing unit.

The above and other aspects of the present invention will be more apparent from the detailed description of the exemplary embodiments thereof in conjunction with the attached drawings in which:
Figure 1 is a diagram showing components of a PDA-based tour guide system for viewing works on exhibition in a Cool Town art gallery according to the related art;
Figure 2 is a flow chart illustrating a process of using the Cool Town art gallery according to the related art;
Figure 3 is a diagram of a gallery tour guide system for providing information on exhibition works in real time in accordance with an exemplary embodiment;
Figure 4 is a diagram showing components of a central control unit, a portable information providing unit, an exhibition data server, and an information managing unit in accordance with an exemplary embodiment;
Figure 5 is a diagram showing a structure of an information storage device in accordance with an exemplary embodiment;
Figure 6 is a flow chart illustrating a process of editing and storing information in a gallery tour guide system in accordance with an exemplary embodiment;
Figure 7 is a flow chart illustrating a process where a person uses a gallery tour guide system in accordance with an exemplary embodiment;
Figure 8 is a flow chart illustrating a process during where a person views works on exhibition in accordance with an exemplary embodiment;
Figure 9 is a flow chart illustrating a process of using a tour guide service in a gallery tour guide system in accordance with an exemplary embodiment; and
Figure 10 is a flow chart illustrating a process of collecting and analyzing information on a user's tour and setting the analysis result in a portable information providing unit in accordance with an exemplary embodiment.

Hereinafter, exemplary embodiments of the present invention will be described in detail with reference to the accompanying drawings.

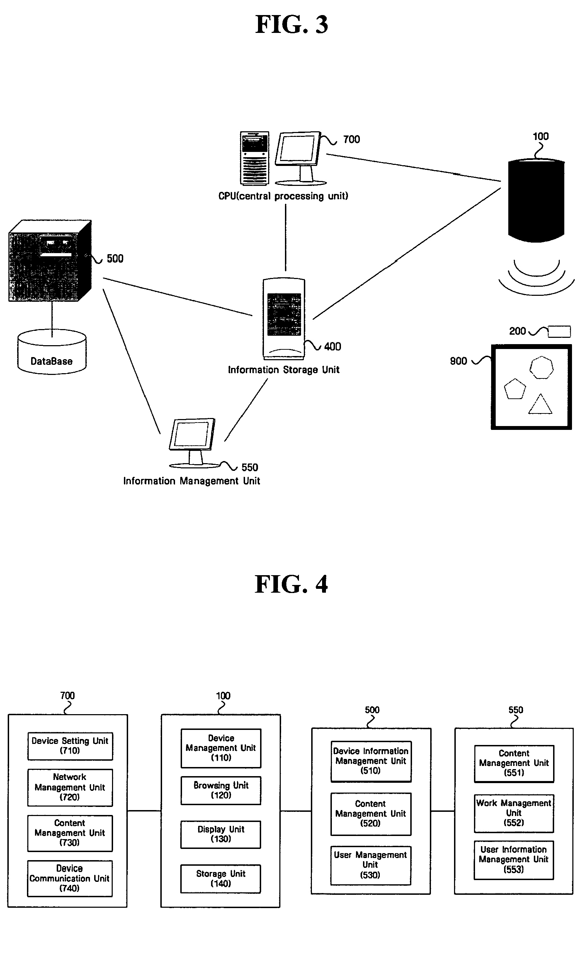

Figure 3 is a diagram of a guided tour system for providing information on works on exhibition in real time in accordance with an exemplary embodiment. A gallery tour guide system generally comprises, as main components, an exhibition data server 500 for storing information on works on exhibition, a portable information providing unit 100 for outputting information of the exhibition data server 500, and an information storage unit 400 for storing the information stored in the exhibition data server 500 in the portable information providing unit 100 and electrically charging the portable information providing unit 100.

The gallery tour guide system further comprises an identification module 200 for providing identification information of works on exhibition to the portable information providing unit 100, and a central control unit 700, such as InfoDesk, for controlling transmission of a notification message from a pavilion or an art gallery to the portable information providing unit 100 in real time and for controlling information exchanges between users.

The central control unit 700 manages leases and returning of the portable information providing unit 100, and may also manage assignment of the portable information providing units 100 to users. Accordingly, the central control unit 700 may send the notification message to users within the pavilion and output information customized to each user. The gallery tour guide system may further include an information managing unit 550 for generating data to be stored in the portable information providing unit 100, and for managing the information storage unit 400.

The information managing unit 550 also edits information on the content of a work on exhibition to be stored in the portable information providing unit 100, and manages arrangement of the works on exhibition. The information managing unit 500 sets general information on the works on exhibition in the pavilion or the art gallery, and provides a management function required for administration of the pavilion or the art gallery. Data to be stored in the information storage unit 400 may be set using this management function.

Figure 3 shows a general configuration of the gallery tour guide system, and an exemplary embodiment thereof will be described in detail with reference to subsequent figures.

Figure 4 is a diagram showing components of the central control unit, the portable information providing unit, the exhibition data server, and the information managing unit in accordance with an exemplary embodiment.

The central control unit 700 controls the use condition of the portable information providing unit 100, and transmits data, such as a notification message (but not limited thereto), to the portable information providing unit 100. In addition, the central control unit 700 may receive user log information from the portable information providing unit.

A device setting unit 710 inputs user information and sets the language and mode (automatic/manual). In addition, the device setting unit 710 remotely manages leases and return of the portable information providing unit 100, synchronizes the content of works on exhibition, and sets log information through the information storage unit 400, which stores data in the portable information providing unit 100. The information storage unit 400 electrically charges several portable information providing units 100 substantially simultaneously, processes the data, and is responsible for leases and user-customized services, return and management of the portable information providing units 100.

A network managing unit 720 sets and manages the state of the network to communicate with the portable information providing unit 100. In addition, the network managing unit 720 manages locations of the portable information providing units 100, collects information on the locations, and optionally applies the collected information when producing usage patterns or guided tour information.

A content managing unit 730 temporarily stores content in the exhibition data server 500 to remotely update content of the works on exhibition or programs modified by the information managing unit 550, and transmits the stored content to the portable information providing unit 100.

A device communicating unit 740 transceives information with the portable information providing unit 100. The device communicating unit 740 may exchange data with the portable information providing unit 100 through transceiver modules installed at several places in the pavilion or art gallery. The device communicating unit 740 also transmits messages in real time to one or more users. The content managing unit 730 transmits information on the modified content through the device communicating unit 740.

The user carries the portable information providing unit 100 and acquires the information on the works on exhibition in the pavilion or art gallery. The portable information providing unit 100 may be a portable digital device such as a PDA, a HPC (hand-held personal computer), or a mobile telephone, but is not limited thereto.

A device managing unit 110 receives the identification information of the work on exhibition through a sensor, and information on the current location within the pavilion, and transmits it to a browsing unit 120 and a display unit 130. The device managing unit 110 controls access to a wireless LAN, receives files and stores the files in a storing unit 140 when it is connected to an information providing unit, and checks synchronization of the information. In addition, the device managing unit 110 may receive information on the user who is currently carrying the portable information providing unit 100, information on the set language, and others. Moreover, the device managing unit 110 may store information on the frequency of access to content that the user has acquired through the portable information providing unit 100, information on content set as an item of interest by the user, information on a pavilion to which the user moves, and others. This information may be also stored in the portable information providing unit 100. Then, this information may be recorded in the exhibition data server 500 through the information storage 400 when the portable information providing unit 100 is returned, and may be managed by the central control unit 700.

The browsing unit 120 outputs the stored content and processes inputs received from a user via a key or a touch pad. In addition, the browsing unit 120 outputs the content corresponding to a received identification number of a work on exhibition to the display unit 130.

The display unit 130 outputs the information output received from the browsing unit 120. In the display unit 130, the stored content is displayed on a user interface such as a screen if it is images or text, or is output through a user interface such as a speaker or a headphone if it is audio information such as speech or music. In addition, the display unit 130 outputs information on an interest listed content, a list of pavilions visited by the user, and others, which are stored in the storage unit 140 at the user's request.

The storing unit 140 stores the information received from the information storage unit 400. In addition, the storing unit 140 stores modified information received from the central control unit 700, content information received for synchronization, and others.

The exhibition data server generally includes a device information managing unit 510, a content management unit 520, and a user managing unit 530.

The device information managing unit 510 manages and analyzes the tour information of the user, the content information, information on a tour path of the portable information providing unit 100, and others, which are stored in the portable information providing unit 100 used by the user. For example but not by way of limitation, the device information managing unit 510 may analyze which exhibition work many users are interested in, which region users spend more time in, and others. The content managing unit 520 manages content describing the works on exhibition and controls the content so that the content is stored in the portable information providing unit 100 through the information storage 400. The user managing unit 530 stores log-in information of the user and an analysis result thereof. The analysis result by the user managing unit 530 may provide users with tour information by theme.

The information managing unit 550 includes a content creating unit 551 (also referred to herein as "content management unit"), a work managing unit 552, and a user information managing unit 553.

The content creating unit 551 creates content to represent information on the works on exhibition. The content creating unit 551 creates the content in the format adapted to the portable information providing unit 100, such as Hypertext Markup Language (HTML) or Extensible Markup Language (XML). The content creating unit 551 includes a function for transforming the input information into content in the format for automatic output using a template file.

The work managing unit 552 may provide information relating to individual works on exhibition, such as the location of the works, identification information of the works, the frequency of the works included in the interest lists of users, and others, and the work managing unit 552 manages this information. The information provided by the work managing unit 552 may be referred to by the content creating unit 551 in creating the content.

The user information managing unit 553 analyzes tour information by users based on log information generated when the users view the works on exhibition. The analysis result may be used to recommend to the users a mode of viewing the works, and it may used to rearrange the works.

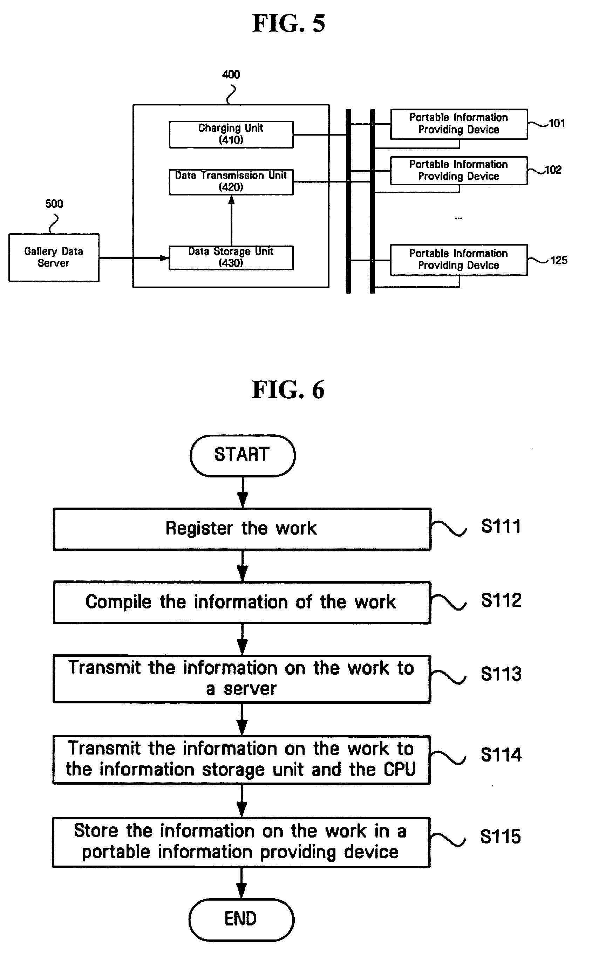

Figure 5 is a diagram showing a structure of the information storage in accordance with an exemplary embodiment. The information storage unit 400 may store information on a work on exhibition in many portable information providing units, and electrically charge them. The information storage 400 generally comprises a charging unit 410, a data transmitting unit 420 and a data storing unit 430. The charging unit 410 electrically charges portable information providing units 101 to 125 by supplying electric power to them. The data storing unit 430 receives information on the work on exhibition from the exhibition data server 500 and stores the received information. The data transmitting unit 420 transmits the information on the work on exhibition to the portable information providing units 101 to 125 as they are stored in connection with the information storage unit 400. As shown in Figure 5, the information storage unit 400 may be connected to any number of portable information providing units, which may be leased to users.

Figure 6 is a flow chart illustrating a process of editing and storing information to be stored in the gallery tour guide system in accordance with an exemplary embodiment.

This process may be optionally performed by a person who manages the pavilion or the art gallery through the information managing unit, but is not limited thereto. First, works are registered S111. More specifically, the location of the pavilion in which the works are placed, identification numbers of the works on exhibition and others are necessary. After registering the works, information on the works is edited into a form that can be output S112. This information may be edited, considering that it will be output in the portable information providing units. If a template file exists, the edition process may be simplified by using this file.

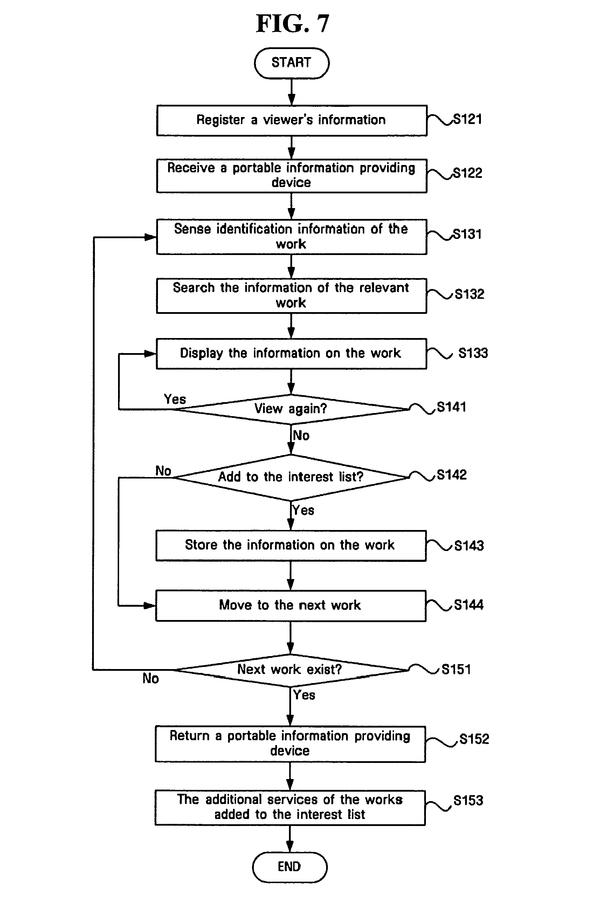

The edited information on the works is transmitted to the exhibition data server 500 S113, and then to the information storage 400 and the central control unit 700 S114. The edited information may be stored in the information managing unit 510 directly or through the exhibition data server 500. The information on the works is stored in a plurality of portable information providing units connected to the information storage S115. The portable information providing units, in which the information on the works is stored, are leased to users (e.g., spectators), and the users acquire the information on the works from the portable information providing units while they are moving through the pavilion. A process in which a user acquires the information is shown in Figure 7.

Figure 7 is a flow chart illustrating a process in which a user uses the gallery tour guide system in accordance with an exemplary embodiment. The user may include one or more persons (e.g., a group of persons), who could constitute individual users or a single collective user.

The user registers their personal information S121. This information may be directed to an individual or groups of individuals. In the case of a group, tour communications among the group members may be supported through the portable information providing units. A notification message may be transmitted to all of the members in the group, and it is possible to provide information on where members of the same group are located. In addition, other information required to see the works may be set. In addition, it is possible to set a free tour mode or automatic mode that indicates a route for viewing the works.

After the personal information is registered, the user receives the portable information providing unit S122. When the user moves to the pavilion, the portable information providing unit senses the identification information of the works through e.g., RFID tags attached to them or through infrared sensors S131.

The information on the works may be sensed on a group basis, in consideration of the special environment of the pavilion having a small area, if it is impossible to sense the identification information of the individual works. That is, the identification information of grouped works in a specific area in the pavilion is sensed, and the grouped works are displayed on the screen of the portable information providing unit such as a PDA. Then, the user selects a work that they want further information on by selecting the item or inputting through a keypad the number of the work in order to read detailed information on the selected work. In addition, when to sense the identification information described above is defined as selection of a work that requires request of information, it is possible for the user to manually operate (not automatic mode) the portable information providing unit so that the user can use guided services only for the works about which the user needs description and detailed information.

The portable information providing unit searches for information on the work corresponding to the identification information of the sensed work S132. Then, the searched information is displayed S133, so as to output the information edited during the process shown in Figure 6. This information may include audio information, such as speech and music, in addition to visual information.

After the information on the work is acquired, it is determined whether the user wants to view the work again S141. If so, the information is displayed again S133. Otherwise, it is determined whether the work is to be added to an interest list S142. If so, the portable information providing unit stores selection of the work S143. Otherwise, the user moves to a next work S144 and repeats operations S131 to S143.

If there is no next work to see S151, the user returns the portable information providing unit S152. At this time, it is possible to provide additional services, such as provision of a catalogue or postcard, using information on works added to the interest list by the user S153.

The tour information and time, and others, which are stored in the portable information providing unit returned by the user, may be transmitted to and analyzed by the exhibition data server.

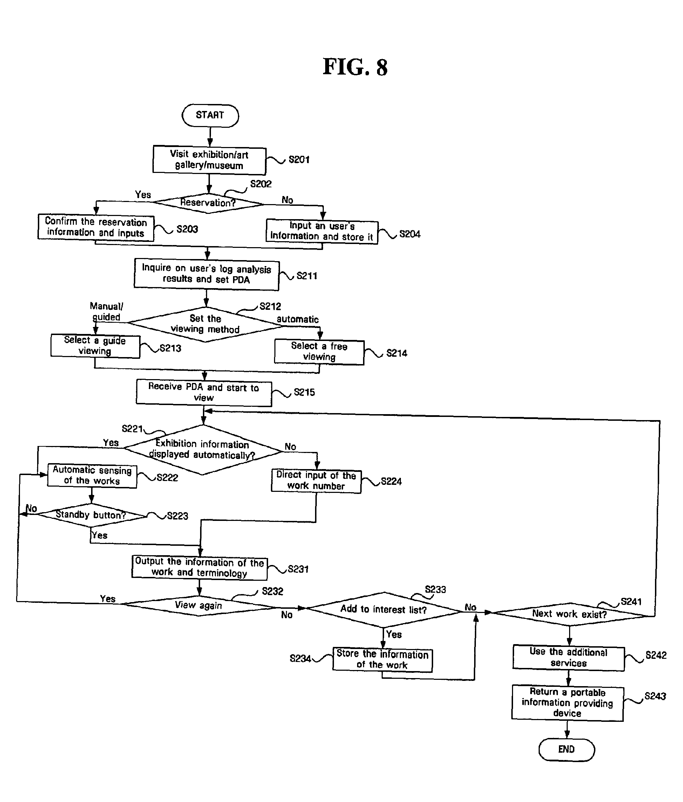

Figure 8 is a flow chart illustrating a process in which a user views works in accordance with an exemplary embodiment. Here, a PDA is used as the portable information providing unit. The PDA is advantageous in that it can be conveniently carried by a user and can easily store digital and multimedia information. In addition, since the PDA includes a communication module, it may exchange data with the exhibition data server. However, the present invention is not limited thereto, and other portable information providing units as would be known by one skilled in the art may be provided.

A user visits an art gallery or a pavilion S201. Then, the user ascertains whether they have made a reservation for the visit S202. If so, the user confirms the reservation information and input about confirmation S203. Otherwise, the user inputs and stores user information S204. The user may input the user information into the PDA. At this time, the PDA may analyze the user's past logs and on this basis may set information in the PDA S211. Data related to information on a current user and information on the work may be also set.

Information on a tour mode for viewing works and a tour path required for viewing the works may be also set. In addition, the user sets a method to see the works S212. The tour mode to view the works may include a guided tour in which a tour path is preset and suggested to the user, and a free tour in which the user views the works freely. The user may select the guided tour S213 or select the free tour S214 according to their preference. Then, the user receives the PDA and begins viewing the works S215. When beginning viewing of the works, the user presses the Play button of the PDA to drive the PDA. When the PDA starts, it begins with voice information such as the message: "You are the n-th visitor", and provides a simple announcement to begin the tour and it provides information about usage. In addition, the PDA may provide a simple path information service through a message such as: "You are now at an entrance of the 1^{st} floor pavilion. You may view the works in the order indicated in the picture", along with a brief introduction about the pavilion.

The method of sensing the works varies depending upon how the information on the works is displayed S221. If the works are automatically sensed, the PDA receives identification numbers of the works through RFID tags attached to them S222. In the case of automatic sensing, a sensing algorithm is used to stably sense the works so that errors in informing about the works, which may be caused following errors in sensing the information, may be minimized.

A mode of maintaining the current screen when: 1) the same ID is consecutively received three times, 2) a standby button is actuated, or 3) a button is clicked by the user may be used; in other cases, a next screen to view a new work is produced after half a second elapses. In Figure 8, a standby button is actuated (the user may use the standby button) S223.

The number of a work is immediately sensed if the user does not click the standby button, and information, terms, and others of the sensed exhibit are output if the user clicks the standby button S231. In operation S231, information related to the work is displayed in various forms including text, audio and so on. In addition, a zoom service to magnify the work is provided. Further, a service to describe those terms that are difficult to understand or are necessary to understand the work, which is underlined, is provided and descriptions about the underlined terms may be viewed or listened to when the underlined terms are clicked. The description of the terms is prepared by referencing a separate template based on the work selected by a curator or a related expert when the work is edited and presented together with a description.

On the other hand, the user may directly input the work number S224. When the user wants to see the work again S232, the information on the work is provided again. At this time, as the identification information of the work is again sensed, operations S222 to S231 are repeated and the information output in operation S231 is repeatedly output. When the user does not want to view the work, it is determined whether the viewed work should be added to the interest list S233. If the work is added to the list, the information on the work is stored S234, and additional services may be used based on the selected work after viewing it. Then, if a next work is present, the process of providing the information required to view the work is repeated in operation S221. If a next work is not present, the user may use additional services. The additional services include, for example but not by way of limitation, purchasing works added to the interest list, printing them in the form of a catalogue or postcard, or viewing the works of interest again. An output service is available for producing the works in the form of a postcard, print, or a sample catalogue (or calendar) by printing pictures in a printing format.

In this output service, the works stored in the list of selected works may be sent to other people in the form of a picture postcard or e-mail, or they may be stored in a personal device using e-mail, a mobile telephone, or other communication devices. In addition, a connection service may be provided in which work-related goods for sale in a store in an art gallery may be searched for and made available for purchase.

Although Figure 8 shows a service for introducing goods for sale in brief and suggesting prices thereof, this service may include a function for supporting the actual purchase activity by adding an authentication process for purchase. The above-mentioned services may be conveniently used by automatically transmitting information from the list of selected works stored in the PDA to a PC of an information retrieval station or a store through an available wired/wireless network, such as a USB.

After use, the PDA is returned to InfoDesk S243, and the user optionally leaves the art gallery or pavilion. The exhibition data server may analyze the user log information stored in the PDA. In addition, connected with the information storage, the exhibition data server may be charged and receive new data or modified data.

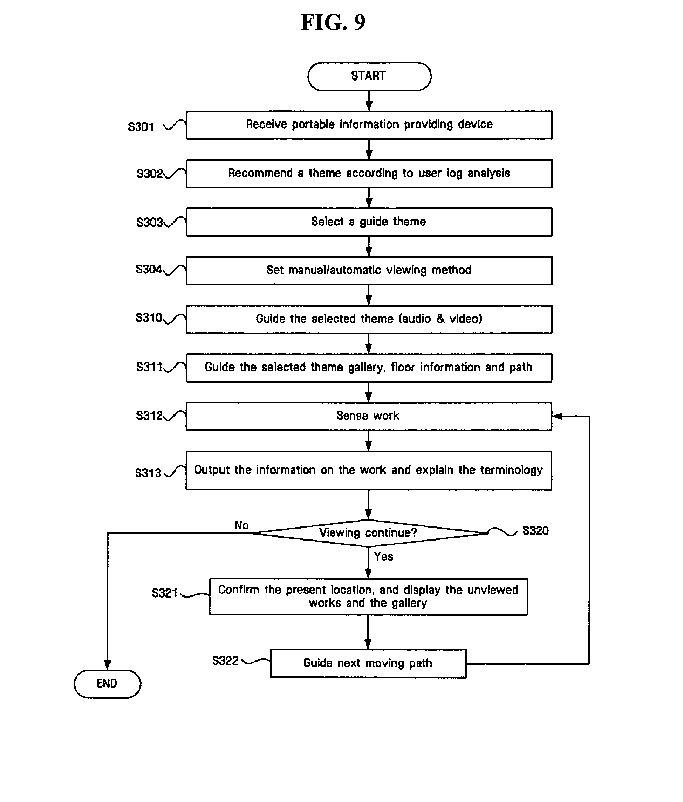

Figure 9 is a flow chart illustrating a process of using a guided tour service in the gallery tour guide system in accordance with an exemplary embodiment.

A guided tour service is a service where a curator or manager of an art gallery plans a separate theme customized for a period or a special event, the theme and related exhibits are edited/registered in the exhibition data server, and then the edited/registered theme and related exhibits are transmitted to the portable information providing unit. The guided tour service may be divided into two modes. In one mode a user directly selects only desired works or a user's unique theme and related works are registered in the portable information providing unit based on log information such as past visit history. After the theme and related works are registered, a tour course is specified using an automatic path generation program installed in the portable information providing unit. The tour course is based on individual positions confirmed through recognition of work/sensor numbers.

A mode where the past log information is analyzed and a tour theme suiting the user's prior tastes can be considered. It is also possible to provide a mode where the theme is prepared and registered in the homepage of the art gallery or a computer at the information desk that manages the portable information providing unit, and the prepared and registered theme is transferred to the portable information providing unit. The guided tour service provides to the user not only the information on the work but also information on the entire pavilion.

The user receives a portable information providing unit S301. Tour themes are recommended as a result of analyzing logs, which contain past usage patterns of users, by the received portable information providing unit S302. The user selects a tour theme among themes S303. Then, either automatic sensing of information on works or manual input of the information on works is selected S304. After the setting is completed, the selected tour theme is provided to the user through audio and/or video S310. Information on a pavilion corresponding to the selected theme, floors, and a path is provided S311. When the user begins to view the works, the works are sensed S312. The sensing of the works is performed according to a sensing method selected in operation S304. According to identification information of the sensed work, the information on the work is output and related terms are described S313. This is substantially identical to operation S231 in Figure 8.

When the user wants to continue to see the works S320, the current location of the user is ascertained, and works and pavilions that have not yet been viewed are displayed S321. The user moves as guided according to a next path S322. After movement, the process of using the guided tour service is repeated starting from operation S312. If the user does not want to continue viewing the works, the tour is finished, and additional services (as shown in Figure 8, for example) may then be used.

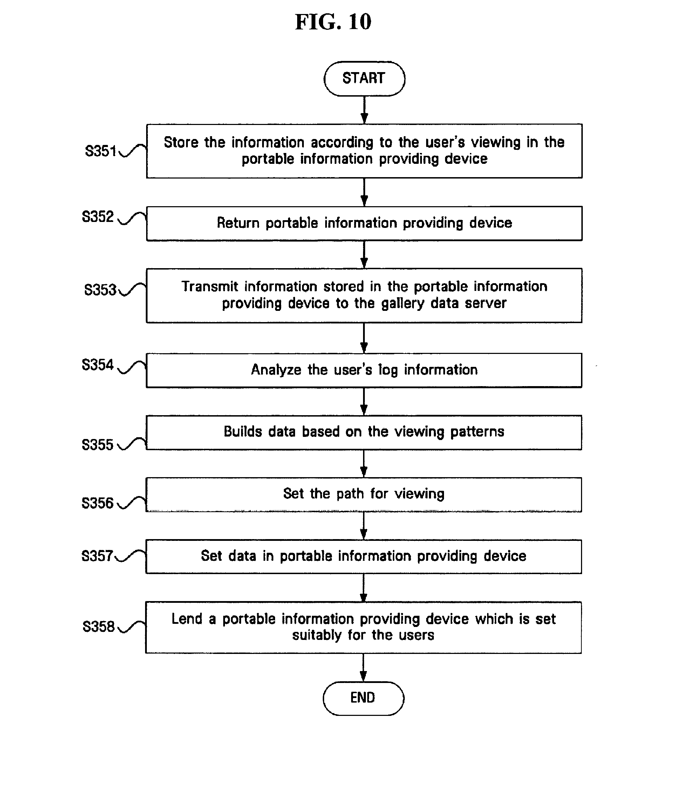

Figure 10 is a flow chart illustrating a process of collecting and analyzing a user's tour information, and setting the collected and analyzed information in the portable information providing unit in accordance with an exemplary embodiment.

When a user views art work or articles on exhibition, various tour patterns are derived. Patterns by tour mode, age, and others, common to users who see the art work or articles on a certain day of the week are derived from individual tour patterns such as the tour time of certain art work or articles, paths along which users view the art work or articles, and others. Since a number of spectators move in museums, art galleries or pavilions, tour paths may be set differently in portable information providing units to efficiently control the spectators and decrease the traffic. In addition, for a group tour, a method may be set to avoid congestion caused by many viewers.

Figure 10 shows a process of storing the tour patterns of users, analyzing the tour patterns, and storing the analyzed tour patterns in a portable information providing unit.

A user who views works on an exhibition while carrying a portable information providing unit stores information produced in the course of viewing the works S351. This information includes information on the tour time of certain works, tour paths, and others, as disclosed above. This information can be used when storing identification information of works viewed, and locations of works may be recognized through wired transceiver modules installed at several places in the pavilion. When the user finishes viewing the works, the portable information providing unit is returned S352. The information on which works the user has viewed, which is stored in the returned portable information providing unit, is transmitted to the exhibition data server S353. The server analyzes user log information S354. For example but not by way of limitation, information to be analyzed may include time spent touring each work, stay time in a certain pavilion, time taken to move from one exhibit to another, favorite work, and others.

Data according to tour patterns is constructed based on the analyzed information S355. In the case of a group tour, an appropriate tour sequence may be proposed. In addition, positions for the works may be set depending on relations between works, and relations between tour times.

Based on the setting, tour paths are set S356. The tour paths may be set in accordance with tour type, age, gender of the user, day of the week, and others. In addition, when a number of users see the works simultaneously, the tour paths may be set such that the users can view the works in a distributed manner without collision with others, and/or to avoid excessive congestion.

Then, the set information is stored in the portable information providing unit S357. This may be accomplished by storing information on the works while electrically charging the portable information providing unit in the information storage. Unlike the information on the works, the tour paths may be set differently depending on the portable information providing units. The portable information providing units may display tour paths suitable for individual users. The users lease portable information providing units suitably set for them, and begin to see the works S358.

In addition, it is possible to set various tour paths in a portable information providing unit and recommend a certain tour path that is suitable for the user. For example but not by way of limitation, a user may select a short tour path if the user wants to see the works quickly or a full tour path if the user wants to fully see the works.

Although Figure 10 shows that the information on the tour pattern of the user is collected when the portable information providing unit is returned, the information may be collected in real time. Since the portable information providing unit communicates with a wireless module when the user moves while viewing the works, the location and stay time of the user may be analyzed in real time. Accordingly, updated tour paths may be shown to the user in real time.

The foregoing exemplary embodiments can be implemented in software, including a set of instructions stored in a computer-readable medium; however, the present invention is not limited thereto, as other implementations of software as would be understood by one of ordinary skill in the art may be used.

According to the exemplary embodiments, it is possible to quickly acquire information on articles on exhibition using stored data synchronized with information on actual articles. In addition, it is possible to provide additional services related to the information on articles on exhibition.

The exemplary embodiments are directed to a gallery tour system. However, these embodiments may also be applied to any system in which information is to be collected from and distributed to users having a path of travel.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system for providing information in real time using stored data, the system comprising:
an data server (500) that stores exhibition information;
a first portable information providing unit (100) that stores and outputs the exhibition information; and
an information storage unit (400) that provides the exhibition information stored in the exhibition data server (500) to the first portable information providing unit (100).

2. The system of claim 1, further comprising a central control unit (700) that exchanges data with the first portable information providing unit (100) in real time.

3. The system of claim 2, wherein the first portable information providing unit (100) can transmit a message to a second portable information providing unit through the central control unit (700).

4. The system of claim 2 or 3, wherein, if the exhibition information stored in the data server (500) is modified or appended, the central control unit (700) transmits the modified or appended information to the portable information providing unit.

5. The system of claim 2, 3 or 4, wherein the central control unit (700) transmits a notification message to the portable information providing unit.

6. The system of any of claims 2 to 5, wherein the central control unit (700) manages lease and return of the portable information providing unit.

7. The system of any of claims 2 to 6, wherein the central control unit (700) provides services relating to exhibition information stored in the portable information providing unit.

8. The system of any preceding claim, wherein the portable information providing unit stores information on exhibits selected by a user.

9. The system of any preceding claim, wherein the information storage unit (400) electrically charges the portable information providing unit.

10. The system of any preceding claim, further comprising an identification module (200) that provides identification information on works related to the exhibition information to the portable information providing unit.

11. The system of claim 10, wherein the identification module (200) uses radio frequency identification (RFID).

12. The system of claim 10, wherein the portable information providing unit senses the identification information through at least one of infrared and radio communication.

13. The system of any preceding claim, wherein the portable information providing unit stores tour pattern information of a user for viewing works related to the exhibition information, and the data server (500) analyzes the tour pattern information to generate a tour path for the user.

14. The system of claim 13, wherein the information storage unit (400) stores the tour path in the portable information providing unit (100).

15. The system of claim 14, wherein the tour path is stored based on the portable information providing unit (100).

16. The system of claim 13, 14 or 15, wherein the tour pattern information includes at least one of viewed work information, tour time information, tour path information, and favorite work information.

17. A method for providing information in real time using stored data, the method comprising:
generating information on an exhibit in an exhibition;
storing the information in a portable information providing unit (100); and
outputting the information from the portable information providing unit (100).

18. The method of claim 17, further comprising, before outputting the information on works, storing personal information of a user in the portable information providing unit (100).

19. The method of claim 17 or 18, further comprising transmitting a message from the portable information providing unit to another portable information providing unit.

20. The method of claim 17, 18 or 19, further comprising, after storing the information, at least one of transmitting and receiving data with respect to the portable information providing unit in real time.

21. The method of any of claims 17 to 20, wherein the outputting comprises:
sensing, by the portable information providing unit (100), identification information of the exhibit;
searching for information corresponding to the identification information; and
outputting the searched information.

22. The method of claim 21, wherein the sensing comprises at least one of infrared communication and radio communication.

23. The method of any of claims 17 to 22, further comprising, if the information on exhibits is modified or appended, receiving the modified or appended information.

24. The method of any of claims 17 to 23, further comprising providing services relating to one or more exhibits selected by a user and stored in the portable information providing unit (100).

25. The method of any of claims 17 to 24, further comprising:
storing in the portable information providing unit (100) a tour pattern information of a user; and
analyzing the tour pattern information to generate a tour path.

26. The method of claim 25, wherein the storing comprises storing the generated tour path.

27. The method of claim 26, wherein the tour path is stored based on the portable information providing unit (100).

28. The method of claim 25, 26 or 27, wherein the tour pattern information includes at least one of viewed exhibit information, tour time information, tour path information, and favorite exhibit information.
